# EUROPEAN PATENT SPECIFICATION

(11) **EP 3 534 226 B1**
(45) Date of publication and mention of the grant of the patent: **09.02.2022**
(21) Application number: 18159820.2
(22) Date of filing: 02.03.2018
(51) Int. Cl.: G05B 19/042

(54) **MODULAR CONTROL SYSTEM**
MODULARES STEUERSYSTEM
SYSTÈME DE CONTRÔLE MODULAIRE

(43) Date of publication of application: 04.09.2019
(73) Proprietor: Emm! solutions GmbH, 71263 Weil der Stadt (DE)
(72) Inventor: Müller, Armin, 71263 Weil der Stadt (DE)
(74) Representative: Meyer zu Bexten, Elmar

(56) References cited:
- EP-A1- 3 043 220
- WO-A1-2005/106229
- DE-A1-102006 020 793

## Description

### Technical Field

The invention relates to the product as per the first portion of Claim 1.

### Background Art

The use of resources poses a fundamental challenge to mobility. In urban environments, space may be considered the most limited resource. To meet the mobility requirements of modern society, systems must be developed that coordinate transportation while providing maximum functionality and performance even in a confined space. For this to be possible, several control systems are required. These control systems are often modular and can therefore be used in different places. An exemplary impact assessment is presented in MAKRIDIS, Michail, et al. Assessing the Impact of Connected and Automated Vehicles. A Freeway Scenario. Advanced Microsystems for Automotive Applications 2017. Lecture Notes in Mobility. 2018, p.213-225.

State-of-the-art control systems for plants and vehicles are commonly designed as failsafe systems, which, upon failure, transition to a secure state with reduced functionality, or fault-tolerant systems, which maintain full functionality even in the event of failure. Both types of systems offer functionality that, when fully enabled, meets given objectives and, upon failure, switches to a safe, that is, functionally acceptable and legally approved, mode of operation. Numerous such solutions are known at various price points.

By way of example, US 7844396 B (DEERE AND CO) 15.03.2007 discloses a modular, extensible software system for use with multi-modal, autonomous, or semi-autonomous vehicles involving the coherent integration of modules with responsibilities for human-interaction, training, path planning, mission execution, navigation, and safety to develop and complete missions. The proposed system expresses vehicle behaviors through numerous small-grain elements to complete a mission and may be adapted or modified by adding new software modules or modifying existing modules as missions change or expand.

WO 2005/106229 A (SIEMENS AG [DE]; MARENCO NORMAN [DE]) 10.11.2005 , EP 3043220 A (WAGO VERWALTUNGS GMBH [DE]) 13.07.2016, and DE 102006020793 A (SKF AB [SE]) 08.11.2007 each disclose a modular control system comprising a first computer and a second computer, wherein the first computer is configured to repetitively commit control data and the second computer is configured to, depending on an overall assessment, signal to release or withhold the control data.

### Summary of invention

The invention as claimed is hereinafter disclosed in such a way that the technical problem with which it deals can be appreciated and the solution can be understood.

### Technical Problem

A problem of prior art control systems lies in their general availability, reduced functionality in case of failure, scalability in view of the different applications outlined above, and user experience when transitioning to their functionally restricted mode. The invention aims to provide a system that overcomes these issues.

### Solution to Problem

The problem is solved as per the characterizing portion of Claim 1.

### Advantageous effect of invention

An advantage of the proposed system is its high availability, which is attained through its redundant computers and power supply, including the capability to restart a failing computer. Also, independent verification by a second computer provides for maximum functionality even in case of failure.

Another upside of a system as per the invention may be seen in its high level of security, owing to the detection of partial failures and anomalies as well as redundancy of computers, buses, and - as mentioned above - power supply.

Allowing for a compact design, the system can be integrated into a single unit.

Furthermore, an embodiment of the invention benefits from its modular and scalable structure: Buses may be added as needed to accommodate a desired bandwidth; functionality can be adapted to the application at hand, enabling the system's use in vehicles or as part of the infrastructure; and where reduced availability is sufficient, a failsafe computer can be used instead of a redundant computer.

There is also the possibility of using multiple systems, such as at corners or axes of the vehicle thus equipped, to build an integrated network.

Noteworthy additional functions of the system include an integrated black box and diagnosis based on analytics beyond conventional control functionality.

Lastly, supplementary functions may be made available through an extended system access. Thus, the system can act as a subsystem in an overall system and be specifically integrated. Also, functions can be outsourced according to demand and criticality.

### Brief description of drawings

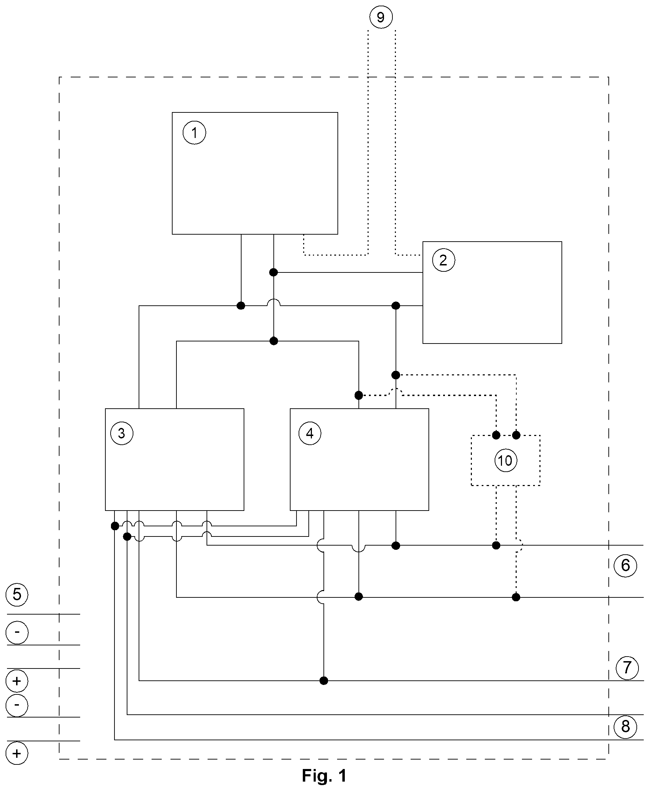

Figure 1 is a block diagram of a modular control system.

### Description of embodiments

In the present embodiment, the input/output buses (7, 8) may be provided several times to cater for a desired bandwidth. More prominently, a singly redundant base bus (6) is the central bus for control and, depending on spare capacity, information acquisition. Except for the low-end bus system (7), all buses (6, 8) are redundant and supplied redundantly by intelligent gateways (3, 4), the latter's primary task being the reception and output of all signals. Their intelligence lies in the fact that the gateways provide a release function for the control data to be output on the base bus (6).

To this end, with each computing run, a first computer (1) passes the control data for execution and shutdown process, along with a factor of time criticality, to the gateways (3, 4), followed by an evaluation of the overall situation by a second computer (2). The latter then sends an enable signal to the gateways (3, 4), who employ a decision matrix as follows:

**Table 1**

| **Criticality** | **Signal** | **Execution** |
|---|---|---|
| High | Withhold | Safe mode |
| Low | Withhold | Degraded functionality |
| None | Withhold | Degraded functionality |
| High | Release | Safe mode |
| Low | Release | Full functionality |
| None | Release | Full functionality |

An emergency control program is stored on the gateways (3, 4) and activated when entering safe mode, while a degraded secure functionality is provided as needed by the first computer (1). Where the latter takes the form of a failsafe computer, the emergency program is triggered instead.

If one of the gateways (3, 4) fails entirely, emergency control is taken over by the first (1) or second computer (2), ensuring a secure function transfer. To this end, pertinent data are committed directly to the base bus (6). For different data bus protocols, a special module (10) takes responsibility for any necessary conversion. For embodiments without a second gateway (4), this "bypass" effectively replaces the redundancy otherwise provided by that gateway (4).

The degraded functionality is provided by the first computer (1). Depending on state, said computer (1) may store various programs implementing the degraded functionality.

In contrast to the first computer (1), the second computer (2) is primarily tasked with data analysis, as opposed to the physically functional logic of the first computer (1). In a manner of speaking, the first (1) and second computers (2) jointly adhere to a four-eyes principle. Herein, the second computer (2) serves to analyze the overall system for a complete system diagnosis, release the control data as per Table 1, trigger the restart of a computer (1, 2) if necessary, and functions as a black box. Depending on the possibly far-reaching analysis, it increases the availability of the function in the system (1-10) as a whole. After sufficiently extensive validation of its functionality, the second computer (2) can also be used to provide limited control functionality, depending on training and validation.

The power supply (5) is redundant. If required in case of failure, it serves the additional purpose of selectively resetting one of the computers (1, 2) by shutting it off and powering it up again.

To tie the system (1-10) in with an integrated network, an extended access (9) is provided, allowing to supplement or outsource information and functionality.

### Industrial applicability

The invention is applicable, among others, throughout the automotive industry.

### Reference signs list

- 1: First computer
- 2: Second computer
- 3: First intelligent gateway
- 4: Second intelligent gateway
- 5: Fault-tolerant energy supply
- 6: Base bus for control and information acquisition
- 7: Low-end bus
- 8: Redundant bus
- 9: Data bus for tying in with an integrated network
- 10: Bridging module

### Citation list

The following documents are cited hereinbefore.

### Patent literature

US 7844396 B (DEERE AND CO) 15.03.2007
WO 2005/106229 A (SIEMENS AG [DE]; MARENCO NORMAN [DE]) 10.11.2005
EP 3043220 A (WAGO VERWALTUNGS GMBH [DE]) 13.07.2016
DE 102006020793 A (SKF AB [SE]) 08.11.2007

### Non-patent literature

MAKRIDIS, Michail, et al. Assessing the Impact of Connected and Automated Vehicles. A Freeway Scenario. Advanced Microsystems for Automotive Applications 2017. Lecture Notes in Mobility. 2018, p.213-225.

## Claims

1. Modular control system (1-10) comprising
a first computer (1), a second computer (2), an energy supply (5), and intelligent gateways (3, 4),
wherein
the first computer (1) is configured to repetitively commit control data to the gateways and
the second computer (2) is configured to, depending on an assessment of the system (1-10) by the second computer (2), signal to the gateways to release or withhold the control data,
**characterized in**
a redundant base bus (6) for transmitting the control data and acquiring information, wherein
the system (1-10) is configured such that if any one of the gateways fails, emergency control is taken over by the first computer (1) or
second computer (2) and the control data is henceforth committed directly to the base bus (6) and
the energy supply (5) is redundant and configured to, on demand by the second computer (2), selectively reset the computers in case of a software failure.

2. System (1-10) according to Claim 1
**characterized in that**
the first computer (1) is failsafe and
the gateways are configured to switch to a safe mode if a criticality is high or the second computer (2) signals to withhold the control data.

3. System (1-10) according to any of the preceding claims
**characterized in**
a preferably nonredundant bus (7) for input and output.

4. System (1-10) according to any of the preceding claims
**characterized in that**
the gateways comprise a first gateway (3) and a second gateway (4), wherein
the second gateway (4) is configured as a backup of the first gateway (3).

5. System (1-10) according to Claim 4
**characterized in**
a redundant bus (8) for input and output.

6. System (1-10) according to Claim 5
**characterized in that**
at least the redundant bus (8) is supplied redundantly by the first gateway (3) and the second gateway (4).

7. System (1-10) according to any of the preceding claims
**characterized in**
a data bus (9) connected to at least the computers for tying the system (1-10) in with an integrated network, such as by complementing or outsourcing information and functionality.

8. System (1-10) according to any of the preceding claims
**characterized in**
a module (10) for bypassing the gateways by connecting the computers to the base bus (6).

9. System (1-10) according to any of the preceding claims
**characterized in that**
the second computer (2) comprises an event data recorder.

## Patentansprüche

1. Baukastenartige Steueranordnung (1-10)
mit
einem ersten Rechner (1), einem zweiten Rechner (2), einer Energieversorgung (5) und intelligenten Schnittstellen (3, 4),
wobei
der erste Rechner (1) derart ausgelegt ist, dass er wiederholt Steuerdaten an die Schnittstellen übermittelt und
der zweite Rechner (2) dazu ausgelegt ist, abhängig von einer Prüfung des Systems (1-10) durch den zweiten Rechner (2) den Schnittstellen zu signalisieren, die Steuerdaten freizugeben oder zurückzuhalten, **gekennzeichnet durch**
einen redundanten Basisbus (6) zum Übertragen der Steuerdaten und Erfassen von Informationen, wobei
die Anordnung (1-10) derart ausgelegt ist, dass bei Ausfall einer der Schnittstellen durch den ersten Rechner (1) oder zweiten Rechner (2) eine Notsteuerung übernommen und die Steuerdaten fortan unmittelbar an den Basisbus (6) übergeben werden und
die Energieversorgung (5) redundant und dazu ausgelegt ist, auf Anforderung des zweiten Rechners (2) bei einem Softwareausfall die Rechner wahlweise zurückzusetzen.

2. Anordnung (1-10) nach Anspruch 1,
**dadurch gekennzeichnet, dass**
der erste Rechner (1) ausfallsicher und
die Schnittstellen dazu ausgelegt sind, in eine sichere Betriebsart zu wechseln, wenn eine erhöhte Gefährdung vorliegt oder der zweite Rechner (2) signalisiert, die Steuerdaten zurückzuhalten.

3. Anordnung (1-10) nach einem der vorangehenden Ansprüche,
**gekennzeichnet durch**
einen vorzugsweise nichtredundanten Bus (7) für Ein- und Ausgabe.

4. Anordnung (1-10) nach einem der vorangehenden Ansprüche,
**dadurch gekennzeichnet, dass**
die Schnittstellen eine erste Schnittstelle (3) und eine zweite Schnittstelle (4) umfassen, welche als Ersatz für die erste Schnittstelle (3) ausgelegt ist.

5. Anordnung (1-10) nach Anspruch 4,
**gekennzeichnet durch**
einen redundanten Bus (8) für Ein- und Ausgabe.

6. Anordnung (1-10) nach Anspruch 5,
**dadurch gekennzeichnet, dass**
zumindest der redundante Bus (8) von der ersten Schnittstelle (3) und der zweiten Schnittstelle (4) redundant versorgt wird.

7. Anordnung (1-10) nach einem der vorangehenden Ansprüche,
**gekennzeichnet durch**
einen Datenbus (9), der zumindest mit den Rechnern verbunden ist, um die Anordnung (1-10) in ein gemeinsames Rechnernetz einzubinden, beispielsweise durch die Vervollständigung oder Auslagerung von Angaben und Fähigkeiten.

8. Anordnung (1-10) nach einem der vorangehenden Ansprüche,
**gekennzeichnet durch**
einen Baustein (10) zum Umgehen der Schnittstellen durch Verbinden der Rechner mit dem Basisbus (6).

9. Anordnung (1-10) nach einem der vorangehenden Ansprüche,
**dadurch gekennzeichnet, dass**
der zweite Rechner (2) einen Ereignisdatenschreiber umfasst.

## Revendications

1. Système de commande modulaire (1-10)
comprenant
un premier ordinateur (1), un deuxième ordinateur (2), une alimentation en énergie (5), et des passerelles intelligentes (3, 4),
dans lequel
le premier ordinateur (1) est configuré pour transmettre de manière répétitive des données de commande aux passerelles et
le deuxième ordinateur (2) est configuré pour, en fonction d'une évaluation du système (1-10) par le deuxième ordinateur (2), signaler aux passerelles de libérer ou de retenir les données de commande,
**caractérisé par**
un bus de base redondant (6) pour transmettre les données de commande et acquérir des informations, dans lequel
le système (1-10) est configuré de telle sorte qu'en cas de défaillance de l'une quelconque des passerelles, la commande d'urgence est prise en charge par le premier ordinateur (1) ou le deuxième ordinateur (2) et les données de commande sont désormais transmises directement au bus de base (6) et l'alimentation en énergie (5) est redondante et configurée pour, à la demande du deuxième ordinateur (2), réinitialiser sélectivement les ordinateurs en cas de défaillance du logiciel.

2. Système (1-10) selon la revendication 1
**caractérisé en ce que**
le premier ordinateur (1) est à sûreté intégrée et
les passerelles sont configurées pour passer à un mode sûr si une criticité est élevée ou le deuxième ordinateur (2) signale de retenir les données de commande.

3. Système (1-10) selon l'une quelconque des revendications précédentes
**caractérisé par**
un bus (7), de préférence non redondant, d'entrée et de sortie.

4. Système (1-10) selon l'une quelconque des revendications précédentes
**caractérisé en ce que**
les passerelles comprennent une première passerelle (3) et une deuxième passerelle (4), la deuxième passerelle (4) étant configurée en secours de la première passerelle (3).

5. Système (1-10) selon la revendication 4
**caractérisé par**
un bus redondant (8) d'entrée et de sortie.

6. Système (1-10) selon la revendication 5
**caractérisé en ce que**
au moins le bus redondant (8) est alimenté de manière redondante par la première passerelle (3) et la deuxième passerelle (4).

7. Système (1-10) selon l'une quelconque des revendications précédentes
**caractérisé par**
un bus de données (9) connecté à au moins les ordinateurs pour relier le système (1-10) à un réseau intégré, par exemple en complétant ou externalisant des informations et fonctionnalités.

8. Système (1-10) selon l'une quelconque des revendications précédentes
**caractérisé par**
un module (10) pour contourner les passerelles en connectant les ordinateurs au bus de base (6).

9. Système (1-10) selon l'une quelconque des revendications précédentes
**caractérisé en ce que**
le deuxième ordinateur (2) comprend un enregistreur de données d'événements.
